# EUROPÄISCHE PATENTANMELDUNG

(11) **EP 2 249 302 A1**
(43) Veröffentlichungstag der Anmeldung: **10.11.2010**
(21) Anmeldenummer: 10161388.3
(22) Anmeldetag: 29.04.2010
(51) Int. Cl.: G06Q 30/00, G07F 17/40, G07F 7/00

(54) **Vorrichtung zur Bestellung und/oder Buchung und/oder Kauf von Waren oder von Angeboten sowie Bestell-, Buchungs- oder Kaufeinrichtung**

(30) Priorität: 30.04.2009 DE 102009003859; 30.04.2009 DE 202009004766 U
(71) Anmelder: CoBox AG, 35647 Waldsolms (DE)
(72) Erfinder: Baudisch, Ulrich, 35647 Waldsolms (DE); Gratz, Jörg, 65187 Wiesbaden (DE)
(74) Vertreter: Knefel, Cordula

(57) **Zusammenfassung**

Die Erfindung betrifft eine Vorrichtung zur Bestellung und/oder Buchung und/oder Kauf von Waren oder von Angeboten mit wenigstens einem Bildschirm und einer Internetverbindung, bei der die Vorrichtung eine begehbare Kabine aufweist, wobei die Vorrichtung zur Durchführung persönlicher Beratungsdienstleistungen ausgebildet ist, bei der in der Kabine der wenigstens eine Bildschirm für eine Videokonferenz und Mittel zur Kommunikation angeordnet sind, und bei der der wenigstens eine Bildschirm im Hochkant-Format angeordnet ist.

## Beschreibung

Die Erfindung betrifft eine Vorrichtung zur Bestellung und/oder Buchung und/oder Kauf von Waren oder von Angeboten sowie eine Bestell-, Buchungs- oder Kaufeinrichtung.

Zum Stand der Technik (DE 10 2006 056 108 A1) gehört ein Verfahren und eine Vorrichtung zur Beschaffung von Medikamenten.

Diese zum Stand der Technik gehörende Vorrichtung besteht aus einem Terminal mit mindestens jeweils einer Leseeinheit zum Einlesen von Medikamenten und Patientendaten, einer Eingabeeinheit, einem Bildschirm und einem Rechner, einer Internetverbindung zwischen dem Rechner des ersten Terminals und einem ersten Server, einer Datenübertragungsverbindung zwischen dem Rechner des Terminals und einem zweiten Server, wobei der zweite Server über direkte oder herstellbare Datenleitungen zu Rechnern in Apotheken verfügt und die Medikamenten- und Patientendaten auf dem zweiten Server von den Rechnern in den Apotheken abrufbar gespeichert sind, wobei die Daten in der gewählten Apotheke anzeigbar, bearbeitbar und druckbar sind.

Diese zum Stand der Technik gehörende Vorrichtung weist den Nachteil auf, dass mit dieser Vorrichtung lediglich beispielsweise ein Rezept eingescannt werden kann, um dem Patienten anschließend die Medikamente liefern zu lassen. Benötigt der Patient zusätzliche Medikamente, zu denen er eine Beratung benötigt, kann er diese mit dieser zum Stand der Technik gehörenden Vorrichtung nicht beschaffen und muss die Apotheke persönlich aufsuchen.

Weiterhin gehört zum Stand der Technik (DE 299 16 488 U1) eine Internet-Servicesäule, die unter anderem in einer Telefonzelle angeordnet sein kann. Diese Internet-Servicesäule besteht aus einer Kombination folgender Komponenten: Computermonitor beziehungsweise Bildschirm, Tastatur, Trackball, Kartenlesegerät oder Münzgerät, zwei Lautsprecherboxen, ein Drucker, eine ISDN-Karte oder ein analoges Modem mit Anschluss an ein Telefonnetz und weiteren Komponenten. Diese zum Stand der Technik gehörende Vorrichtung weist den Nachteil auf, dass mit dieser Vorrichtung lediglich ein Zugang zum Internet geschaffen wird. Der Nutzer muss sich Angebote selber heraussuchen mit der für das Internet und für das Produkt erforderlichen Kenntnis.

Zum Stand der Technik (EP 1 471 001 A1) gehört darüber hinaus ein Einrichtungsmodul zur Informationsbereitstellung an Bord von Transportmitteln, insbesondere Flugzeugen. Dieses zum Stand der Technik gehörende Einrichtungsmodul ist als Informationsterminal ausgebildet, welches Passagieren eines Flugzeuges Zugriffsmöglichkeiten zum Internet gewährleistet. Auch hier müssen die Passagiere die notwendige Kenntnis mit dem Umgang des Internets und auch die notwendige Kenntnis von den Produkten haben, um sich die richtigen Angebote herauszusuchen.

Das der Erfindung zugrunde liegende technische Problem besteht darin, eine Vorrichtung zur Bestellung und/oder Buchung und/oder Kauf von Waren oder von Angeboten sowie eine Bestell-, Buchungs- oder Kaufeinrichtung anzugeben, die für den Kunden ortsnah aufgestellt werden kann und bei der darüber hinaus die Kunden keinerlei Internet-Kenntnisse oder dergleichen besitzen müssen.

Dieses technische Problem wird durch eine Vorrichtung mit den Merkmalen gemäß Anspruch 1 sowie eine Bestell-, Buchungs- oder Kaufeinrichtung mit den Merkmalen gemäß Anspruch 10 gelöst.

Die erfindungsgemäße Vorrichtung zur Bestellung und/ oder Buchung und/oder Kauf von Waren oder von Angeboten mit wenigstens einem Bildschirm und einer Internetverbindung, wobei die Vorrichtung eine begehbare Kabine aufweist, zeichnet sich dadurch aus, dass die Vorrichtung zur Durchführung von persönlichen Beratungsdienstleistungen ausgebildet ist, dass in der Kabine der wenigstens eine Bildschirm für eine Videokonferenz und Mittel zur Kommunikation angeordnet sind und dass der wenigstens eine Bildschirm im Hochkantformat angeordnet ist.

Die erfindungsgemäße Vorrichtung erlaubt eine persönliche Beratung mit dem entsprechenden Dienstleister, beispielsweise einer Apotheke, einem Reisebüro, einem Ticketschalter der Deutschen Bahn, einem Bankberater oder Verkäufer von Lebensmitteln oder Kosmetika und dergleichen, da Kommunikationsmittel sowie wenigstens ein Bildschirm für eine Videokonferenz vorgesehen sind, vorzugsweise live mit 1:1-Bild und Audio (HD-Qualität, LCD-Großbildschirm), ähnlich wie bei einer Videokonferenz oder Zwei-Wege-Kommunikation. Hierdurch ist es möglich, eine Kommunikation mit Fachpersonal des Dienstleisters durchzuführen, und zwar originalgetreu, als wenn eine persönliche Beratung mit physischer Präsenz beider Gesprächspartner unmittelbar stattfinden würde. Dadurch, dass die Vorrichtung eine begehbare Kabine aufweist, ist die notwendige Diskretion gegeben. Dadurch, dass der wenigstens eine Bildschirm im Hochkant-format angeordnet ist, besteht die Möglichkeit, die zu beratende Person - zum Beispiel den Oberkörper - in Originalgröße abzubilden. Hierdurch erhält der Kunde den Eindruck, dass eine persönliche Beratung mit physischer Verkäufer-/ Beraterpräsenz stattfindet.

Gerade ältere Menschen sind häufig nicht so mobil, dass beispielsweise eine Apotheke in einem Nachbarort aufgesucht werden kann. In diesem Falle ist es hilfreich, dass eine Medikamentenbestellung beziehungsweise die Bestellung allgemein von Waren oder die Buchung von Angeboten oder Aufträgen, wie zum Beispiel Bahntickets, Reisen oder Finanzprodukte über die erfindungsgemäße entsprechende Vorrichtung ortsnah vorgenommen werden kann, ohne dass jeweils eine Person des Dienstleisters, beispielsweise der Apotheke, des Reisebüros, der Deutschen Bahn oder der Bank vor Ort sein muss.

Die erfindungsgemäße Vorrichtung zeichnet sich dadurch aus, dass der Kunde eine persönliche Beratungsdienstleistung erhält, wobei die Technik der Vorrichtung für den Kunden vollständig in den Hintergrund tritt.

Der Kunde muss keine Tastatur betätigen, sondern erhält die persönliche Beratungsdienstleistung so, als wenn er in einem Geschäft oder einer Apotheke oder dergleichen stehen würde.

Lediglich die Ankunft des Kunden wird vorteilhaft über ein Signal an die Gegenstelle, beispielsweise Apotheke, übermittelt, beispielsweise über einen Bewegungsmelder, einen Rufknopf, einen Sensor, der die Tür der Kabine überwacht oder dergleichen.

Vorteilhaft ist die Internetleitung, wenn sie für die Videokonferenz zwischen dem Dienstleister und der erfindungsgemäßen Vorrichtung vorhanden ist, wenigstens als 2-MB-Leitung aufgebaut. Es werden hochauflösende Kameras verwendet, dadurch entsteht für den Kunden der Eindruck einer persönlichen Beratung (HD-Qualität).

Gemäß einer vorteilhaften Ausbildung der Erfindung ist die Kabine als schließbarer Raum ausgebildet. Vorteilhaft ist eine Tür vorgesehen. Hierdurch ist gewährleistet, dass jeweils das Beratungsgespräch ausschließlich zwischen dem Dienstleister und dem oder den Kunden stattfindet.

Die Kabine ist vorteilhaft als beleuchteter und belüfteter Raum ausgebildet.

Die Mittel zur Kommunikation bestehen vorteilhaft aus wenigstens einer Kamera, wenigstens einem Mikrophon und wenigstens einem Lautsprecher, so dass die Kamera den Kunden in der Vorrichtung aufnimmt und dass der Kunde über das Mikrophon von dem Dienstleister verstanden wird. In gleicher Weise wird, wie in der Art einer Videokonferenz, über den wenigstens einen Lautsprecher in der Vorrichtung akustisch wiedergegeben, was der Dienstleister zu dem Kunden sagt.

Gemäß einer weiteren vorteilhaften Ausführungsform ist in der Vorrichtung wenigstens ein Kartenleser für den bargeldlosen Zahlungsverkehr angeordnet. Ist die Vorrichtung dazu vorgesehen, dass beispielsweise Medikamente bestellt werden können oder eine Reise gebucht oder ein Ticket für eine Bahnfahrt gekauft werden kann, werden diese Waren und/ oder Angebote unmittelbar mittels Geldkarte bezahlt, Tickets können zum Beispiel in der Kabine unmittelbar ausgedruckt werden.

Darüber hinaus ist vorteilhaft ein Scanner vorgesehen, mit dem beispielsweise ein Rezept eingescannt werden kann. Der Apotheker kann in diesem Falle gleich erkennen, um welches Medikament es sich handelt und den Kunden hier entsprechend beraten.

Gemäß einer weiteren vorteilhaften Ausführungsform der Erfindung ist wenigstens ein Drucker vorgesehen. Dieser Drucker dient beispielsweise dazu, eine Fahrkarte auszudrucken, wenn der Dienstleister beispielsweise die Deutsche Bahn, ein Nahverkehrsverbund oder dergleichen ist.

Darüber hinaus ist vorteilhaft wenigstens eine Eingabeeinheit für die Eingabe von Daten und/oder Ziffern vorgesehen. Die Eingabeeinheit dient beispielsweise beim bargeldlosen Zahlungsverkehr dazu, die Karte und die Geheimnummer einzugeben.

Gemäß einer vorteilhaften Ausführungsform ist zusätzlich eine abgeschlossene Box mit einer Öffnung zur Aufnahme von Rezepten vorgesehen. Dient die Vorrichtung zum Kauf von rezeptpflichtigen Medikamenten, ist es erforderlich, dass das Rezept abgegeben wird, damit die Medikamente ausgeliefert werden können. Hierzu sind so genannte Rezeptsammelstellen vorgesehen. In die Box werden die Rezepte nach der Bestellung und der Kommunikation mit dem Apotheker oder der Apothekenhelferin eingeworfen. Die Box ist abgeschlossen, so dass der Patient oder ein unbefugter Dritter das Rezept nicht mehr entnehmen kann.

Nach der Bestellung kann der Apotheker beispielsweise täglich die Rezepte der Rezeptsammelbox entnehmen oder entnehmen lassen und anschließend die rezeptpflichtigen Medikamente ausliefern lassen.

Gemäß einer weiteren Ausführungsform der Erfindung ist ein Rufknopf vorgesehen. Dieser Rufknopf dient dazu, dass ein Kunde, der die Kabine betritt, den Rufknopf betätigt. Der Dienstleister erhält in diesem Fall ein Signal, so dass er weiß, dass sich in der Kabine ein Kunde befindet, der eine Beratung wünscht.

Es besteht auch gemäß einer weiteren vorteilhaften Ausführungsform der Erfindung die Möglichkeit, dass bei Betätigen der Tür der Kabine eine Vorrichtung automatisch ein Signal auslöst, welches dem Signal des Rufknopfes entspricht, so dass der Dienstleister erkennt, dass sich in der Kabine eine Person befindet, die eine Beratung wünscht.

Das Signal, dass sich in der Box eine Person befindet, kann auch beispielsweise über einen in der Kabine angeordneten Bewegungsmelder an den Dienstleister abgegeben werden.

Wie schon ausgeführt, weist der Bildschirm vorteilhaft eine Größe auf, dass eine Person, zumindest deren Oberkörper mit Kopf, in Originalgröße darstellbar ist. Hierzu ist der Bildschirm gemäß der Erfindung hochkant angeordnet, um zu vermeiden, dass der Bildschirm in der Breite eine zu große Ausdehnung haben muss, wenn er wie üblich im Querformat angeordnet wäre.

Ist die Person in Originalgröße auf dem Bildschirm darstellbar, erhält der Kunde den Eindruck, dass er eine unmittelbare Beratung durch den physisch präsenten Dienstleister erhält und nicht über eine Videokonferenz. Zwischen der beratenden und der/den zu beratenden Person/Personen kann ein Live-1:1-Video- und Audiodialog geführt werden.

Darüber hinaus weist der Bildschirm in der entsprechenden Größe den Vorteil auf, dass beispielsweise ein Reisebüro als Dienstleister Angebote unmittelbar auf dem Bildschirm in entsprechender Größe darstellen kann, so dass der Kunde problemlos die Angebote auf dem Bildschirm entziffern kann.

Die erfindungsgemäße Vorrichtung dient dazu, eine flächendeckende Beratungs- und Bestellmöglichkeit für Kunden anzubieten, ohne dass jeweils vor Ort Fachpersonal des Dienstleisters anwesend sein muss.

Darüber hinaus ist eine Personalersparnis möglich. Ein Dienstleister kann beispielsweise mehrere erfindungsgemäße Vorrichtungen betreiben. Hierzu ist bei dem Dienstleister selbst ebenfalls wenigstens ein Monitor, wenigstens eine Kamera, wenigstens ein Lautsprecher und wenigstens ein Mikrophon vorgesehen, das heißt, die Mittel zur Kommunikation, die für eine Videokonferenz erforderlich sind. Beispielsweise besteht für einen Apotheker die Möglichkeit, die Kommunikationsmittel in seiner Apotheke aufzustellen, so dass er die Kunden in seiner Apotheke bedienen kann und wenn ein Kunde eine der erfindungsgemäßen Vorrichtungen betritt, zusätzlich diese Person beraten kann.

Gleiches gilt auch für andere Dienstleister.

Unter dem Begriff "Waren" werden die verschiedensten Waren verstanden. Besonders vorteilhaft wird die erfindungsgemäße Vorrichtung jedoch zur Bestellung von Medikamenten eingesetzt. Es ist jedoch auch möglich, sämtliche anderen Waren mittels der Vorrichtung zu bestellen.

Unter dem Begriff "Buchung von Angeboten" wird verstanden, dass beispielsweise Tickets für den öffentlichen Nah- oder Fernverkehr gebucht werden können oder beispielsweise Dienstleistungen eines Reisebüros.

Es besteht natürlich auch die Möglichkeit, andere Dienstleistungen, wie beispielsweise Dienstleistungen von Banken und Sparkassen über die erfindungsgemäße Vorrichtung zu nutzen oder Finanzprodukte zu kaufen mit jeweils einer persönlichen Beratung.

Die erfindungsgemäße Bestell-, Buchungs- oder Kaufeinrichtung mit einer Vorrichtung zur Bestellung und/oder Buchung und/oder Kauf von Waren oder von Angeboten mit wenigstens einem Bildschirm und einer Internetverbindung, wobei die Vorrichtung eine begehbare Kabine aufweist, wobei die Vorrichtung zur Durchführung von persönlichen Beratungsdienstleistungen ausgebildet ist, wobei in der Kabine der wenigstens eine Bildschirm für eine Videokonferenz und Mittel zur Kommunikation angeordnet sind, und bei der der wenigstens eine Bildschirm im Hochkant-Format angeordnet ist, zeichnet sich dadurch aus, dass eine Gegenstelle mit wenigstens einem Bildschirm für die Videokonferenz und Mittel zur Kommunikation vorgesehen sind, und dass zwischen der Vorrichtung und der Gegenstelle ein Live-1:1-Video- und Audiodialog führbar ist.

Die erfindungsgemäße Bestell-, Buchungs- oder Kaufeinrichtung weist den Vorteil auf, dass der Verkäufer oder Anbieter in der Gegenstelle mit dem Kunden in der Vorrichtung kommunizieren kann, so als ob der Kunde unmittelbar in einer Verkaufsstelle anwesend wäre. Der Kunde erhält also eine persönliche Beratungsdienstleistung, obwohl eine räumliche Distanz zwischen der Gegenstelle und der Vorrichtung vorhanden ist. Darüber hinaus benötigt der Kunde keinerlei Internetkenntnisse oder technische Kenntnisse, um die Vorrichtung zu bedienen.

Gemäß einer besonders bevorzugten Ausführungsform der Erfindung ist die Bestell-, Buchungs- oder Kaufeinrichtung so ausgebildet, dass der wenigstens eine Kartenleser für den bargeldlosen Zahlungsverkehr und/oder der wenigstens eine Scanner und/oder der wenigstens eine Drucker und/oder die Eingabeeinheit für die Eingabe von Daten und/oder Ziffern lediglich von der Gegenstelle steuerbar ausgebildet sind.

Hierdurch ist gewährleistet, dass der Kunde keinerlei Technik- oder Internetkenntnisse besitzen muss, um über die Bestell-, Buchungs- oder Kaufeinrichtung Waren oder Angebote zu kaufen, zu buchen oder zu bestellen.

Die erfindungsgemäße Bestell-, Buchungs- oder Kaufeinrichtung ist vorteilhaft derart ausgebildet, dass die gesamte Steuerung der Vorrichtung und der Gegenstelle ausschließlich von der Gegenstelle aus durchführbar ist.

Auch hierdurch wird der Kauf- oder Buchungsvorgang für den Kunden ohne Technikkenntnisse möglich.

Weitere Merkmale und Vorteile der Erfindung ergeben sich anhand der zugehörigen Zeichnung, in der ein Ausführungsbeispiel einer erfindungsgemäßen Vorrichtung nur beispielhaft dargestellt ist. In der Zeichnung zeigen:
- Fig. 1: eine Vorrichtung in perspektivischer Ansicht von außen;
- Fig. 2: eine Ausstattung der Vorrichtung in Ansicht;
- Fig. 3: die Verbindung der Vorrichtung mit einem Dienstleister.

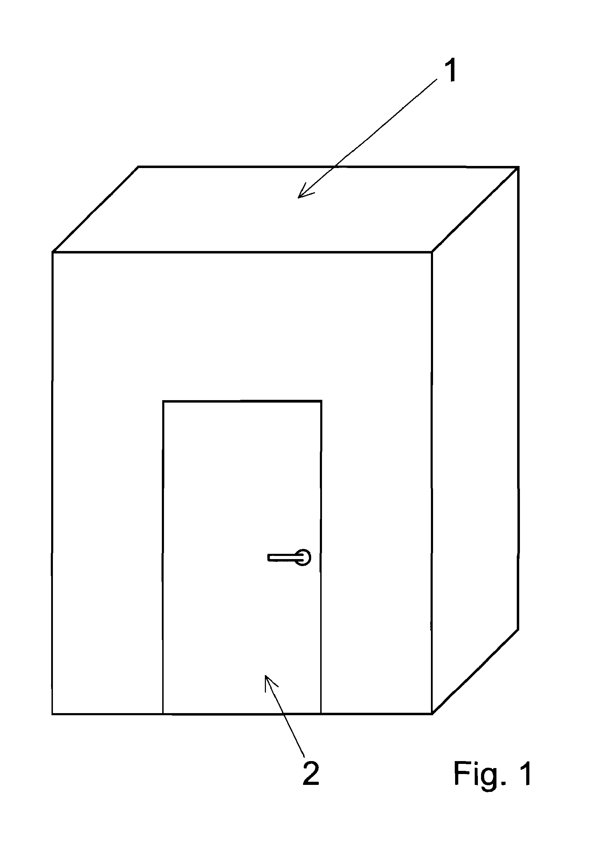

Fig. 1 zeigt eine Vorrichtung 1, die als begehbare Kabine mit einer Tür 2 ausgebildet ist.

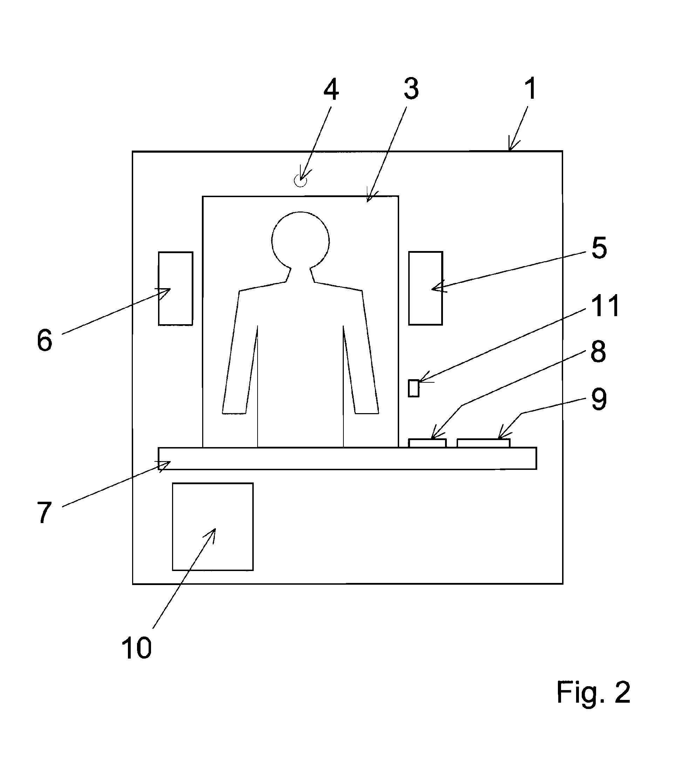

Gemäß Fig. 2 ist in der Vorrichtung 1 ein Bildschirm 3 hochkant angeordnet, so dass eine Person eines Dienstleisters, vorzugsweise der Oberkörper und Kopf in Originalgröße wiedergegeben werden kann.

Oberhalb des Bildschirmes 3 ist eine Kamera 4 angeordnet.

Rechts und links von dem Bildschirm 3 sind Lautsprecher 5, 6 angeordnet. Unterhalb des Bildschirmes 3 ist ein Tresen 7 vorgesehen. In dem Tresen 7 sind eine Eingabeeinheit 8 sowie ein Scanner 9 integriert. Unterhalb des Tresens 7 ist eine Box 10 zur Aufnahme von Rezepten angeordnet. Für die Kommunikation in Form einer Videokonferenz ist zusätzlich ein Mikrophon 11 vorgesehen.

Weitere Komponenten wie beispielsweise ein Kartenleser für den bargeldlosen Zahlungsverkehr, ein Drucker und dergleichen sind in Fig. 2 nicht dargestellt.

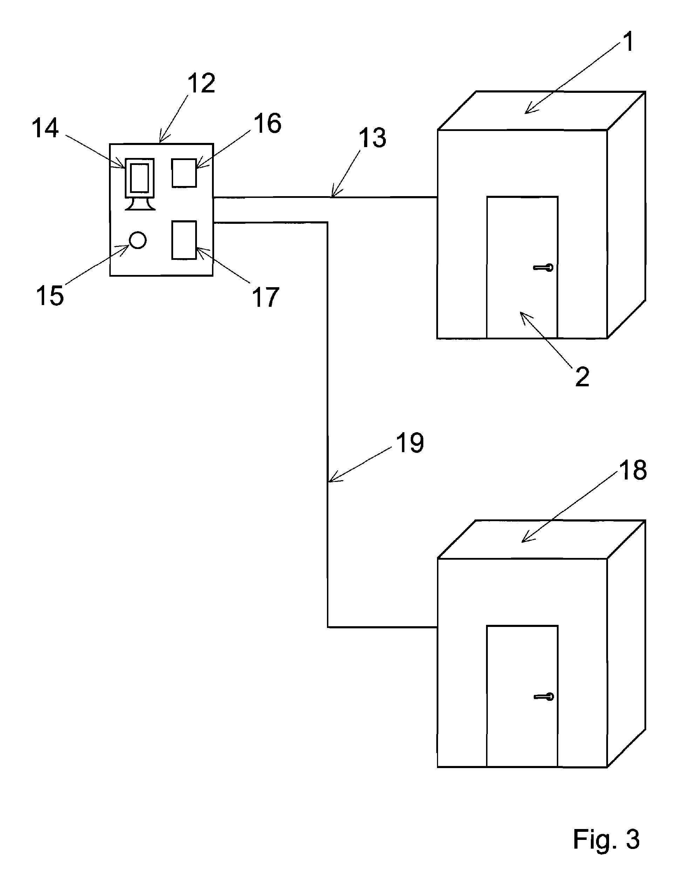

Gemäß Fig. 3 ist zwischen der Vorrichtung 1 und einer Gegenstelle 12 für die Videokonferenz, die bei einem Dienstleister angeordnet ist, eine Internetverbindung 13 vorgesehen. Bei dem Dienstleister 12 sind ebenfalls ein Monitor 14, eine Kamera 15, ein Lautsprecher 16 und ein Mikrophon 17 angeordnet. Wie in Fig. 3 dargestellt, kann von dem Dienstleister 12 eine weitere Vorrichtung 18 über eine Internetleitung 19 mittels Videokonferenz angesprochen werden.

### Bezugszahlen

- 1: Vorrichtung
- 2: Tür
- 3: Bildschirm
- 4: Kamera
- 5: Lautsprecher
- 6: Lautsprecher
- 7: Tresen
- 8: Eingabeeinheit
- 9: Scanner
- 10: Box
- 11: Mikrophon
- 12: Dienstleister
- 13: Internetverbindung
- 14: Monitor
- 15: Kamera
- 16: Lautsprecher
- 17: Mikrophon
- 18: Vorrichtung
- 19: Internetverbindung

## Patentansprüche

1. Vorrichtung zur Bestellung und/oder Buchung und/ oder Kauf von Waren oder von Angeboten mit wenigstens einem Bildschirm und einer Internetverbindung, wobei die Vorrichtung eine begehbare Kabine aufweist,
**dadurch gekennzeichnet, dass** die Vorrichtung (1, 18) zur Durchführung von persönlichen Beratungsdienstleistungen ausgebildet ist, dass in der Kabine der wenigstens eine Bildschirm (3) für eine Videokonferenz und Mittel zur Kommunikation (4, 5, 6, 11) angeordnet sind, und dass der wenigstens eine Bildschirm (3) im Hochkant-Format angeordnet ist.

2. Vorrichtung nach Anspruch 1, **dadurch gekennzeichnet, dass** die Kabine als schließbarer Raum ausgebildet ist.

3. Vorrichtung nach Anspruch 1 oder 2, **dadurch gekennzeichnet, dass** als Mittel zur Kommunikation wenigstens eine Kamera (4), wenigstens ein Mikrophon (11) und wenigstens ein Lautsprecher (5, 6) vorgesehen sind.

4. Vorrichtung nach einem der vorhergehenden Ansprüche, **dadurch gekennzeichnet, dass** wenigstens ein Kartenleser für den bargeldlosen Zahlungsverkehr und/oder wenigstens ein Scanner (9) und/oder wenigstens ein Drucker und/ oder eine Eingabeeinheit (8) für die Eingabe von Daten und/oder Ziffern vorgesehen ist.

5. Vorrichtung nach einem der vorhergehenden Ansprüche, **dadurch gekennzeichnet, dass** eine abgeschlossene Box (10) mit einer Öffnung zur Aufnahme von Rezepten vorgesehen ist.

6. Vorrichtung nach einem der vorhergehenden Ansprüche, **dadurch gekennzeichnet, dass** ein Rufknopf vorgesehen ist.

7. Vorrichtung nach einem der vorhergehenden Ansprüche, **dadurch gekennzeichnet, dass** auf dem wenigstens einen Bildschirm (3) eine Person wenigstens teilweise in Originalgröße darstellbar ist, und dass zwischen den Personen ein Live-1:1-Video- und Audiodialog führbar ist.

8. Vorrichtung nach einem der vorhergehenden Ansprüche, **dadurch gekennzeichnet, dass** für die Abgabe eines Signales bei Betätigen einer Tür (2) der Kabine eine Signal auslösende und/oder übermittelnde Vorrichtung vorgesehen ist.

9. Vorrichtung nach einem der vorhergehenden Ansprüche, **dadurch gekennzeichnet, dass** in der Kabine wenigstens ein Bewegungsmelder vorgesehen ist.

10. Bestell-, Buchungs- oder Kaufeinrichtung mit einer Vorrichtung nach Anspruch 1, **dadurch gekennzeichnet, dass** eine Gegenstelle (12) mit wenigstens einem Bildschirm (14) für die Videokonferenz und Mittel zur Kommunikation (15, 16, 17) vorgesehen sind, und dass zwischen der Vorrichtung (1) und der Gegenstelle (12) ein Live-1:1-Video- und Audiodialog führbar ist.

11. Bestell-, Buchungs- oder Kaufeinrichtung nach Anspruch 10, **dadurch gekennzeichnet, dass** der wenigstens eine Kartenleser für den bargeldlosen Zahlungsverkehr und/oder der wenigstens eine Scanner (9) und/oder der wenigstens eine Drucker und/oder die Eingabeeinheit (8) für die Eingabe von Daten und/oder Ziffern lediglich von der Gegenstelle (12) steuerbar ausgebildet sind.

12. Bestell-, Buchungs- oder Kaufeinrichtung nach Anspruch 10 oder 11, **dadurch gekennzeichnet, dass** die gesamte Steuerung der Vorrichtung (1) und der Gegenstelle (12) ausschließlich von der Gegenstelle (12) aus durchführbar ist.
